# EUROPÄISCHE PATENTSCHRIFT

(11) **EP 2 668 076 B1**
(45) Veröffentlichungstag und Bekanntmachung des Hinweises auf die Patenterteilung: **25.03.2015**
(21) Anmeldenummer: 12701476.9
(22) Anmeldetag: 18.01.2012
(51) Int. Cl.: B60T 17/22, B60T 13/46, B60T 13/68, G01L 27/00, F02D 45/00

(54) **VERFAHREN ZUR ÜBERWACHUNG DES SIGNALWERTES EINES UNTERDRUCKSENSORS**
METHOD FOR MONITORING THE SIGNAL VALUE OF A VACUUM SENSOR
PROCÉDÉ POUR SURVEILLER LA VALEUR DE SIGNAL D'UN CAPTEUR DE DÉPRESSION

(30) Priorität: 24.01.2011 DE 102011003055; 19.12.2011 DE 102011088938
(43) Veröffentlichungstag der Anmeldung: 04.12.2013
(73) Patentinhaber: Continental Teves AG & Co. oHG, 60488 Frankfurt (DE)
(72) Erfinder: GRUBER, Steffen, 63801 Kleinostheim (DE); ULLRICH, Thorsten, 64579 Gernsheim (DE); ROSS, Scott, 61440 Oberursel (DE); PEICHL, Thomas, 61206 Wöllstadt (DE)
(74) Vertreter: Höer, Daniela
(86) Internationale Anmeldenummer: PCT/EP2012/050670
(87) Internationale Veröffentlichungsnummer: WO 2012/101012

(56) Entgegenhaltungen:
- WO-A1-2007/082932
- US-A1- 2006 288 766

## Beschreibung

Die Erfindung betrifft ein Verfahren zur laufenden Überwachung des Signalwertes eines Unterdrucksensors. Der Unterdrucksensor ist in einem Unterdrucksystem eines Fahrzeuges vorgesehen. Ein derartiges Unterdrucksystem kann beispielsweise zur Speisung eines Bremskraftverstärkers eingesetzt werden. Der Unterdruck in dem Unterdrucksystem wird mittels eines (oder mehrerer) Unterdruckgenerators erzeugt.

Bremssysteme nach dem Stand der Technik verwenden einen Vakuumbremskraftverstärker, d.h. sie nutzen Unterdruck als Hilfsenergie. Als Unterdruckgenerator dient i.d.R. der bei einem Verbrennungsmotor im Ansaugrohr entstehende Unterdruck oder eine mit dem Verbrennungsmotor gekoppelte mechanische Unterdruckpumpe. Insbesondere bei Fahrzeugen mit elektrischem Antrieb (Elektro- oder Hybridfahrzeuge) werden auch elektrische Unterdruckpumpen eingesetzt.

Mitunter wird bei modernen Fahrzeugauslegungen (Downsizing) bei Ausfall der Vakuumversorgung oder des Vakuumbremskraftverstärkers nicht mehr die erforderliche Mindestbremswirkung erreicht, so dass in diesem Fall eine hydraulische Bremskraftunterstützungsfunktion, die über das ESC System (Electronic Stability Control-System) realisiert wird, aktiviert werden muss. Eine solche Bremskraftunterstützungsfunktion nach dem Stand der Technik verwendet hierzu das Signal eines Unterdrucksensors.

Um die Verfügbarkeit der hydraulischen Unterstützungsfunktion zu gewährleisten bzw. bei Nichtverfügbarkeit eine Fahrerwarnung zu generieren, ist eine Überwachung des Unterdrucksensorsignals erforderlich. Bekannte Verfahren hierzu sind:
a) Verwendung eines redundanten Unterdrucksensors
b) Verarbeitung eines weiteren Unterdrucksignals, z.B. aus der Motorsteuerung

Beispielsweise aus der WO 2007/082932 A1 ist ein Verfahren zur Plausibilisierung des Signalwertes eines Unterdrucksensors bekannt, bei dem der Sensorsignal mit einem Modell verglichen wird, welches auf Grundlage empirisch ermittelter Daten in Verbindung mit einigen physischen Vorgängen die Zustandsgrößen in der Unterdruck- und der Arbeitskammer eines Bremskraftverstärkers schätzt.

Ferner ist aus US 2006//0288766 A1 ein Diagnosesystem für einen Vakuumsensor eines Bremskraftverstärkers bekannt, bei dem der Vakuumsignal des Vakuumsensors mit dem Vakuumsignal des Motors zwecks Plausibilisierung des Vakuumsensorsignals verglichen wird.

Es ist Aufgabe der Erfindung, ein Verfahren der eingangs genannten Art anzugeben, welches mit möglichst geringem baulichen Aufwand, insbesondere ohne Einsatz einer redundanten Unterdruckmessung, auskommt.

Diese Aufgabe wird durch die Merkmale des unabhängigen Hauptanspruchs gelöst.

Erfindungsgemäß werden die Betriebszustände des Unterdruckgenerators und des Bremskraftverstärkers überwacht. Dafür entsteht meist kein zusätzlicher baulicher Aufwand, da diese ohnehin für das ESC-System (Electronic Stability Control-System) überwacht werden müssen.

In Abhängigkeit der detektierten Betriebszustände des Unterdruckgenerators und des Bremskraftverstärkers wird eine obere Fehlerschranke (-p_vac_fehlerschranke) berechnet, die eine Unterdruckwert signalisiert, der von dem Unterdrucksystem unter den gegebenen Betriebsbedingungen und unter Berücksichtigung dessen baulicher Eigenschaften in der gegeben Betriebssituation nicht überschritten werden kann. Signalisiert das Signal des Unterdrucksensors dennoch einen höheren Unterdruckwert als der aktuelle Wert der Fehlerschranke, so muß entweder ein Meßfehler oder überhaupt ein fehlerhafter Unterdrucksensor vorliegen. Daher wird in diesem Fall ein Fehler erkannt.

Als Unterdruck wird dabei der Relativ-Druck zum Umgebungs-Luft-Druck bezeichnet. Der Unterdruck in dem Unterdrucksystem ist (bei Betrieb des Systems) niedriger als der Umgebungs-Luft-Druck.

Bei dem Unterdruckgenerator handelt es sich vorzugsweise um einen Ansaugkanal eines Verbrennungsmotor und/oder um eine Vakuumpumpe handelt.

Das erfindungsgemäße Verfahren nutzt die Tatsache aus, dass bei modernen Fahrzeugarchitekturen Betriebszustände existieren, in denen der Unterdruckgenerator abgeschaltet ist. Dies ist z.B. bei Fahrzeugen mit Motor-Stopp-Start Funktion und bei solchen mit elektrischer Vakuumpumpe der Fall.

Das Verfahren basiert auf der Berechnung einer oberen Fehlerschranke anhand eines vereinfachten physikalischen Modells des Unterdrucksystems (Unterdruckgenerator und Bremskraftverstärker).

Gemäß einer weiteren Ausgestaltung der Erfindung wird vorzugsweise ein Fahrerwarnsignal, beispielsweise durch Ansteuerung einer Warnlampe, ausgegeben, wenn der Unterdruckwert des Unterdrucksensorsignal den aktuellen, berechneten Wert der oberen Fehlerschranke überschreitet.

Gemäß der Erfindung wird bei aktivem Unterdruckgenerator und unbetätigtem Bremskraftverstärker ausgehend von einem Startwert ein mit einem festgelegten Gradienten (Verfahrensparameter p_grad_evac) ansteigender Wert der Fehlerschranke -p_vac_fehlerschranke berechnet, wobei der Startwert
- bei Systemstart ein hoher negativer Wert ist,
- sonst der jeweils zuletzt berechnete Wert der Fehlerschranke ist.

Gemäß einer weiteren Ausgestaltung der Erfindung nimmt der Verfahrensparameter p_grad_evac unterschiedliche Werte je nach Art des jeweils aktivierten Unterdruckgenerators an (unterschiedliche Gradienten der Evakuierung bei aktivem Verbrennungsmotor / aktiver Vakuumpumpe oder bei Überlagerung beider).

Gemäß einer vorteilhaften weiteren Ausgestaltung der Erfindung wird der Anstieg der Fehlerschranke auf einen vorgebbaren Maximalwert begrenzt, wobei dieser Grenzwert anhand des maximal erreichbaren Unterdrucks des eingesetzten Unterdruckgenerators festzulegen ist, z.B. 900 mbar auf Meereshöhe.

Vorzugsweise kann gemäß einer weiteren Ausgestaltung der Erfindung der Maximalwert unterschiedliche Werte je nach Art der jeweils aktivierten Vakuumquelle annehmen (unterschiedliches Unterdruckniveaus bei Evakuierung mittels Verbrennungsmotor / Vakuumpumpe oder bei Überlagerung beider).

Bei inaktiver Vakuumquelle und unbetätigtem Bremskraftverstärker wird gemäß einer vorteilhaften Ausgestaltung der berechnete Wert der Fehlerschranke vorzugsweise konstant gehalten.

Bei inaktiver Vakuumquelle und betätigtem Bremskraftverstärker kann gemäß einer vorteilhaften Ausgestaltung der Erfindung ferner die Fehlerschranke um einen vorgebbaren Differenzwert herabgesetzt werden.

Vorzugsweise wird gemäß einer weiteren vorteilhaften Ausgestaltung der Erfindung der Betrag des vorgebbaren Differenzwertes in Abhängigkeit des hydraulischen Bremsdruckes, der sich aufgrund der Bremsbetätigung einstellt, berechnet.

Die Berechnung des vorgebbaren Differenzwertes kann gemäß einer weiteren vorteilhaften Ausgestaltung der Erfindung in Abhängigkeit des hydraulischen Bremsdruckes unter Berücksichtigung der Volumenaufnahmecharakteristik des Bremssystems erfolgen.

Der innerhalb einer Bremsbetätigung erreichte Maximalwert des hydraulischen Bremsdruckes kann vorzugsweise zur Berechnung des vorgebbaren Differenzwertes herangezogen werden.

Weiter kann vorzugsweise der kumulierte Wert des hydraulischen Bremsdruckes während einer Bremsbetätigung zur Berechnung des vorgebbaren Differenzwertes herangezogen werden.

Der hydraulische Bremsdruck p_tmc wird vorzugsweise mittels eines Drucksensors im ESC System erfasst.

Alternativ kann gemäß einer weiteren vorteilhaften Ausgestaltung der Erfindung auch der Verfahrweg der Membran im Vakuumbremskraftverstärker zur Berechnung des vorgebbaren Differenzwertes herangezogen werden.

Eine andere vorteilhafte Ausgestaltung der Erfindung sieht vor, dass der innerhalb einer Bremsbetätigung erreichte Maximalwert des Verfahrweges der Membran im Bremskraftverstärker zur Berechnung des vorgebbaren Differenzwertes herangezogen wird.

Ferner kann auch der kumulierte Wert des Verfahrweges der Membran im Bremskraftverstärker innerhalb einer Bremsbetätigung zur Berechnung des vorgebbaren Differenzwertes herangezogen werden.

Der Verfahrweg der Membran im Vakuumbremskraftverstärker wird vorteilhaft mittels eines Membranwegsensors im Bremskraftverstärker oder mittels eines Auslenkungssensors (Weg oder Winkel) am Bremspedal oder mittels eines Wegsensors im oder am Hauptbremszylinder erfasst.

Nachfolgend wird ein Ausführungsbeispiel der Erfindung anhand der Zeichnung näher erläutert. Es zeigen:
Figur 1 einen beispielhaften Zeitverlauf der erfindungsgemäß bestimmten Fehlerschranke,
Figur 2 eine symbolische Darstellung der Bestimmung des Differenzwertes (delta_p_vac) in Abhängigkeit des hydraulischen Bremsdruckes und
Figur 3 eine Darstellung entsprechend Figur 2 mit zusätzlicher Berücksichtigung der Volumenaufnahmecharakteristik des Bremssystems.

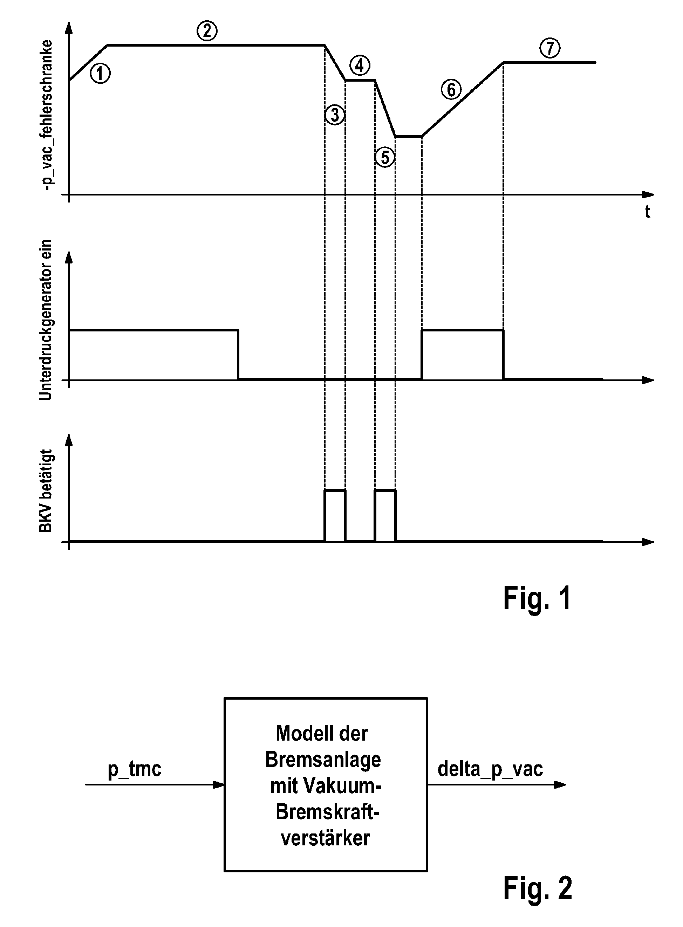

Figur 1 zeigt exemplarisch einen zeitlichen Verlauf der Werte der Fehlerschranke, wie sie anhand des erfindungsgemäßen Verfahrens ermittelbar ist.

In dem Zeitdiagramm der Figur 1 ist unten symbolisiert, zu welchen Zeitspannen der Bremskraftverstärker eines Fahrzeuges (und somit also dessen Bremspedal) betätigt wird.

Der Bremskraftverstärker seinerseits wird über ein Unterdrucksystem (beide nicht dargestellt) von einer Unterdruckquelle gespeist, deren aktive Zeitspannen in dem Zeitdiagramm in der vertikalen Mitte eingetragen sind. Bei der in der Figur nicht dargestellten Unterdruckquelle kann es sich beispielsweise um den Ansaugkanal eines Verbrennungsmotors oder um eine gesonderte Pumpe handeln.

Erfindungsgemäß wird in Abhängigkeit der Betriebszustände des Unterdruckgenerators und des Bremskraftverstärkers eine obere Fehlerschranke (-p_vac_fehlerschranke) berechnet. Diese ist in dem Zeitdiagramm der Figur 1 als oberster Verlauf eingetragen.

Es wird ein Fehler erkannt, wenn der Unterdruck-Signalwert des Unterdrucksensors den aktuellen Wert der Fehlerschranke überschreitet, wenn also der gemessene Unterdruck höher als der theoretisch erreichbare und von der Fehlerschranke signalisierte Unterdruck ist. Dies deutet darauf hin, dass ein in dem Fahrzeug vorgesehener Unterdrucksensor einen Unterdruckwert in dem Unterdrucksystem signalisiert, der nicht plausibel ist, da er unter den gegebenen baulichen Bedingungen und Betriebszuständen nicht erreichbar wäre.

Der zeitliche Verlauf der Werte der Fehlerschranke ist in der Figur 1 in 7 Phasen dargestellt, die im Folgenden näher erläutert werden.

Bei aktivem Unterdruckgenerator und unbetätigtem Bremskraftverstärker (Phase 1) kann ausgehend von einem Startwert ein mit einem festgelegten Gradienten (Verfahrensparameter p_grad_evac) ansteigender Wert der Fehlerschranke -p_vac_fehlerschranke berechnet werden, wobei der Startwert bei Systemstart ein hoher negativer Wert ist (siehe Phase 1 in Figur 1).

Erreicht dieser Wert (Beginn der Phase 2) einen Maximalwert (Verfahrensparameter p_vac_max), der vorgebbar ist, wird der Wert der Fehlerschranke nicht weiter erhöht, wie dies auch im weiteren Verlauf der Phase 2 in der Figur 1 erkennbar ist, in der der Verlauf der Werte der Fehlerschranke mit Erreichen eines Maximalwertes nicht mehr weiter ansteigt.

Der Maximalwert kann vorteilhaft anhand des maximal erreichbaren Unterdrucks der eingesetzten Vakuumquelle vorgegeben werden, z.B. 900 mbar auf Meereshöhe.

Im weiteren Verlauf der Phase 2 wir der Unterdruckgenerator inaktiv.

Während einer folgenden Phase 3 wird der Bremskraftverstärker betätigt, und der Verlauf der Werte der Fehlerschranke in Phase 3 fällt. Vorteilhaft wird in dieser Phase eine laufende Verminderung der Werte der Fehlerschranke um einen vorgebbaren Differenzwert (delta_p_vac) vorgenommen.

In Phase 4 sind weder Bremskraftverstärker noch Unterdruckgenerator aktiv. Die Werte der Fehlerschranke werden daher konstant gehalten.

In der folgenden Phase 5 liegt grundsätzlich die gleiche Betriebssituation wie in Phase 3 vor; der Bremskraftverstärker wird betätigt und der Unterdruckgenerator ist inaktiv. Daher nimmt die Fehlerschranke in Phase 5 ebenfalls einen fallenden Verlauf an.

Nach einer kurzen Phase ohne weitere Ereignisse (vergleichbar Phase 4) folgt eine Phase 6, in der der Bremskraftverstärker inaktiv, der Unterdruckgenerator jedoch aktiviert ist. In dieser Phase steigen die Werte der Fehlerschranke wieder an, vorteilhaft wiederum mit einem vorgebbaren Gradienten.

In der nachfolgenden nur angedeuteten Beginn der nachfolgenden Phase 7 werden die Werte der Fehlerschranke konstant gehalten, da weder Bremskraftverstärker noch Unterdruckgenerator aktiv sind.

Anhand der Figur 1 wird deutlich, dass der zeitliche Verlauf der mittels des erfindungsgemäßen Verfahrens ermittelten Fehlerschranke eine Art Maximalwert des möglichen Unterdrucks in dem Unterdrucksystems des Fahrzeuges darstellt. Wird von einem Unterdrucksensor ein höherer Unterdruck als von der Fehlerschranke angegeben signalisiert, so wird ein Fehler erkannt, da dieser signalisierte Unterdruck nicht plausibel ist.

Vorzugsweise wird der Differenzwert delta_p_vac in Abhängigkeit des hydraulischen Bremsdruckes p_tmc, der sich aufgrund der Bremsbetätigung einstellt, berechnet (siehe Figur 2). Dazu wird ein Modell der Bremsanlage, insbesondere der Volumencharakteristika und der Änderungen dieser, beispielsweise im Bremskraftverstärker, eingesetzt.

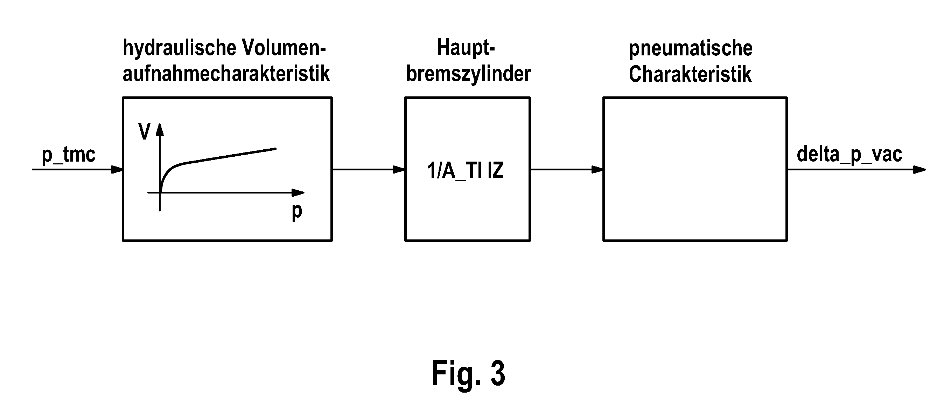

Dies ist näher angedeutet in Figur 3. Es wird vorteilhaft in Abhängigkeit des hydraulischen Bremsdruckes p_tmc und unter Berücksichtigung der Volumenaufnahmecharakteristik des Bremssystems, der Größe des Hauptbremszylinders und unter Berücksichtigung der pneumatischen Charakteristik des Bremssystems eine Berechnung des Differenzwert delta_p_vac vorgenommen.

## Patentansprüche

1. Verfahren zur Überwachung des Signalwertes eines Unterdrucksensors eines Unterdrucksystems in einem Fahrzeug, wobei
- in dem Unterdrucksystem ein Unterdruckgenerator beziehungsweise Vakuumquelle und ein Bremskraftverstärker vorgesehen sind,
- in Abhängigkeit der Betriebszustände des Unterdruckgenerators und des Bremskraftverstärkers eine obere Fehlerschranke (-p_vac_fehlerschranke) berechnet wird, wobei
- ein Fehler erkannt wird, wenn der Signalwert des Unterdrucksensors den aktuellen Wert der Fehlerschranke überschreitet, und wobei bei aktiver Vakuumquelle und unbetätigtem Bremskraftverstärker ausgehend von einem Startwert ein mit einem vorgebbaren Gradienten (p_grad_evac) ansteigender Wert der Fehlerschranke - (p_vac_fehlerschranke) berechnet wird, wobei der Startwert
- bei Systemstart ein hoher negativer Wert ist,
- im übrigen der jeweils zuletzt berechnete Wert der Fehlerschranke ist.

2. Verfahren nach Anspruch 1, **dadurch gekennzeichnet, dass** es sich bei dem Unterdruckgenerator um einen Ansaugkanal eines Verbrennungsmotor und/oder um eine Vakuumpumpe handelt.

3. Verfahren nach Anspruch 1 oder 2, **dadurch gekennzeichnet, dass**
ein Fahrerwarnsignal, vorzugsweise mittels einer Warnlampe, ausgegeben wird, wenn der Wert des Unterdrucksensorsignals den wert der berechneten oberen Fehlerschranke (-p_vac_fehlerschranke) überschreitet.

4. Verfahren nach einem der Ansprüche 1 bis 3, **dadurch gekennzeichnet, dass** der Gradient (p_grad_evac) einen variablen Wert in Abhängigkeit der Anzahl, Bauart und Leistungsfähigkeit des oder der aktivierten Unterdruckgenerators(en) aufweist.

5. Verfahren nach einem der Ansprüche 1 bis 4, **dadurch gekennzeichnet, dass** der Wert der Fehlerschranke auf einen vorgebbaren Maximalwert (p_vac_max) begrenzt wird, wobei dieser Grenzwert anhand des maximal erreichbaren Unterdrucks des eingesetzten Unterdruckgenerators gewählt wird.

6. Verfahren nach Anspruch 5, **dadurch gekennzeichnet, dass** der Maximalwert der Fehlerschranke (p_vac_max) einen variablen Wert in Abhängigkeit der Anzahl, Bauart und Leistungsfähigkeit des oder der aktivierten Unterdruckgenerators(en) aufweist.

7. Verfahren nach einem der Ansprüche 1 bis 6, **dadurch gekennzeichnet, dass** bei inaktivem Unterdruckgenerator und unbetätigtem Bremskraftverstärker der Wert der Fehlerschranke konstant gehalten wird.

8. Verfahren nach einem der Ansprüche 1 bis 6, **dadurch gekennzeichnet, dass** bei inaktivem Unterdruckgenerator und unbetätigtem Bremskraftverstärker der Wert der Fehlerschranke um einen vorgebbaren Differenzwert (delta_p_vac) herabgesetzt wird.

9. Verfahren nach Anspruch 8, **dadurch gekennzeichnet, dass** der Differenzwert (delta_p_vac) in Abhängigkeit eines hydraulischen Bremsdruckes (p_tmc), der sich aufgrund einer Bremsbetätigung einstellt, berechnet wird.

10. Verfahren nach einem der Ansprüche 8 oder 9, **dadurch gekennzeichnet, dass** die Berechnung des Differenzwertes (delta_p_vac) in Abhängigkeit des hydraulischen Bremsdruckes (p_tmc) unter Berücksichtigung der Volumenaufnahmecharakteristik des Bremssystems erfolgt.

11. Verfahren nach einem der Ansprüche 8 bis 10, **dadurch gekennzeichnet, dass** der während einer Bremsbetätigung erreichte Maximalwert des hydraulischen Bremsdruckes (p_tmc) zur Berechnung des Differenzwertes (delta_p_vac) herangezogen wird.

12. Verfahren nach einem der Ansprüche 8 bis 10, **dadurch gekennzeichnet, dass** der kumulierte Wert des hydraulischen Bremsdruckes (p_tmc) innerhalb einer Bremsbetätigung zur Berechnung des Betrages delta_p_vac herangezogen wird.

13. Verfahren nach einem der Ansprüche 9 bis 12, **dadurch gekennzeichnet, dass** der hydraulische Bremsdruck (p_tmc) mittels eines Drucksensors im ESC (Elektronische Stabilitätskontrolle) System erfasst wird.

14. Verfahren nach einem der Ansprüche 9 bis 12, **dadurch gekennzeichnet, dass** der Verfahrweg der Membran im Vakuumbremskraftverstärker zur Berechnung des Differenzwertes (delta_p_vac) herangezogen wird.

15. Verfahren nach Anspruch 14, **dadurch gekennzeichnet, dass** der während einer Bremsbetätigung erreichte Maximalwert des Verfahrweges der Membran im Bremskraftverstärker zur Berechnung des Differenzwertes (delta_p_vac) herangezogen wird

16. Verfahren nach Anspruch 14, **dadurch gekennzeichnet, dass** der während einer Bremsbetätigung erreichte kumulierte Wert des Verfahrweges der Membran im Bremskraftverstärker innerhalb einer Bremsbetätigung zur Berechnung des Differenzwertes (delta_p_vac) herangezogen wird.

17. Verfahren nach einem der Ansprüche 14 bis 16, **dadurch gekennzeichnet, dass** der Verfahrweg der Membran im Vakuumbremskraftverstärker mittels eines Membranwegsensors im Bremskraftverstärker erfasst wird.

18. Verfahren nach einem der Ansprüche 14 bis 16, **dadurch gekennzeichnet, dass** der Verfahrweg der Membran im Vakuumbremskraftverstärker mittels eines Auslenkungssensors (Weg oder Winkel) am Bremspedal erfasst wird.

19. Verfahren nach einem der Ansprüche 14 bis 16, **dadurch gekennzeichnet, dass** der Verfahrweg der Membran im Vakuumbremskraftverstärker mittels eines Wegsensors im oder am Hauptbremszylinder erfasst wird.

## Claims

1. Method for monitoring the signal value of a vacuum sensor of a vacuum system in a vehicle, wherein
- a vacuum generator or vacuum source and a brake booster are provided in the vacuum system,
- an upper error threshold (-p_vac_errorthreshold) is calculated as a function of the operating states of the vacuum generator and of the brake booster, wherein
- an error is identified when the signal value of the vacuum sensor exceeds the current value of the error threshold, and wherein when the vacuum source is active and the brake booster is not activated, a value of the error threshold (p_vac_errorthreshold) which increases with a predefinable gradient (p_grad_evac) is calculated on the basis of a starting value, wherein the starting value
- is a high negative value at the system start,
- and otherwise is the value of the error threshold respectively calculated last.

2. Method according to Claim 1, **characterized in that** the vacuum generator is an intake duct of an internal combustion engine and/or a vacuum pump.

3. Method according to Claim 1 or 2, **characterized in that** a driver warning signal is output, preferably by means of a warning lamp, when the value of the vacuum sensor signal exceeds the value of the calculated upper error threshold (- p_vac_errorthreshold).

4. Method according to one of Claims 1 to 3, **characterized in that** the gradient (p_grad_evac) has a variable value as a function of the number, design and performance of the activated vacuum generator or generators.

5. Method according to one of Claims 1 to 4, **characterized in that** the value of the error threshold is limited to a predefinable maximum value (p_vac_max), wherein this limiting value is selected on the basis of the maximum achievable vacuum of the vacuum generator which is used.

6. Method according to Claim 5, **characterized in that** the maximum value of the error threshold (p vac max) has a variable value as a function of the number, design and performance of the activated vacuum generator or generators.

7. Method according to one of Claims 1 to 6, **characterized in that**, when the vacuum generator is inactive and the brake booster is not activated, the value of the error threshold is kept constant.

8. Method according to one of Claims 1 to 6, **characterized in that**, when the vacuum generator is inactive and the brake booster is not activated, the value of the error threshold is reduced by a predefinable difference value (delta_p_vac).

9. Method according to Claim 8, **characterized in that** the difference value (delta_p_vac) is calculated as a function of a hydraulic brake pressure (p_tmc) which occurs owing to activation of the brakes.

10. Method according to one of Claims 8 and 9, **characterized in that** the calculation of the difference value (delta_p_vac) is carried out as a function of the hydraulic brake pressure (p_tmc) taking into account the volume capacity characteristic of the brake system.

11. Method according to one of Claims 8 to 10, **characterized in that** the maximum value of the hydraulic brake pressure (p_tmc) which is achieved during an activation of the brakes is used to calculate the difference value (delta_p_vac).

12. Method according to one of Claims 8 to 10, **characterized in that** the accumulated value of the hydraulic brake pressure (p_tmc) in an activation of the brakes is used to calculate the absolute value (delta_p_vac).

13. Method according to one of Claims 9 to 12, **characterized in that** the hydraulic brake pressure (p_tmc) is detected by means of a pressure sensor in the ESC (electronic stability control) system.

14. Method according to one of Claims 9 to 12, **characterized in that** the travel distance of the diaphragm in the vacuum brake booster is used to calculate the difference value (delta_p_vac).

15. Method according to Claim 14, **characterized in that** the maximum value of the travel distance of the diaphragm in the brake booster which is achieved during an activation of the brakes is used to calculate the difference value (delta_p_vac).

16. Method according to Claim 14, **characterized in that** the accumulated value of the travel distance of the diaphragm in the brake booster within an activation of the brakes, which is achieved during an activation of the brakes, is used to calculate the difference value (delta_p_vac).

17. Method according to one of Claims 14 to 16, **characterized in that** the travel distance of the diaphragm in the vacuum brake booster is detected by means of a diaphragm travel sensor in the brake booster.

18. Method according to one of Claims 14 to 16, **characterized in that** the travel distance of the diaphragm in the vacuum brake booster is detected by means of a deflection sensor (distance or angle) on the brake pedal.

19. Method according to one of Claims 14 to 16, **characterized in that** the travel distance of the diaphragm in the vacuum brake booster is detected by means of a travel sensor in or on the master brake cylinder.

## Revendications

1. Procédé de surveillance de la valeur de signal d'un capteur de sous-pression d'un système de sous-pression dans un véhicule ;
- un générateur de sous-pression et/ou une source de vide et un amplificateur de force de freinage étant prévus dans le système de sous-pression ;
- en fonction des états de fonctionnement du générateur de sous-pression et de l'amplificateur de force de freinage une barrière d'erreur supérieure (-p_vac_fehlerschranke) étant calculée ;
- une erreur étant reconnue lorsque la valeur de signal du capteur de sous-pression dépasse la valeur actuelle de la barrière d'erreur et en présence d'une source de vide active et d'un amplificateur de force de freinage non actionné à partir d'une valeur initiale, une valeur de la barrière d'erreur - (p_vac_fehlerschranke) augmentant avec un gradient (p_grad_evac) prédéfinissable étant calculée, la valeur initiale étant :
- au démarrage du système une valeur négative élevée ;
- pour le reste la valeur de la barrière d'erreur respectivement calculée en dernier.

2. Procédé selon la revendication 1, **caractérisé en ce que** le générateur de sous-pression est un canal d'aspiration d'un moteur à combustion interne et/ou une pompe à vide.

3. Procédé selon la revendication 1 ou 2, **caractérisé en ce qu'**un signal d'avertissement de conducteur est émis, de préférence à l'aide d'une lampe d'avertissement, lorsque la valeur du signal de capteur de sous-pression dépasse la valeur de la barrière d'erreur supérieure calculée (-p_vac_fehlerschranke).

4. Procédé selon l'une quelconque des revendications 1 à 3, **caractérisé en ce que** le gradient (p_grad_evac) présente une valeur variable en fonction du nombre, du type et de la capacité de puissance du ou des générateurs de sous-pression activés.

5. Procédé selon l'une quelconque des revendications 1 à 4, **caractérisé en ce que** la valeur de la barrière d'erreur est limitée à une valeur maximale (p vac max) prédéfinissable, cette valeur limite étant sélectionnée à l'aide de la sous-pression maximale pouvant être atteinte par le générateur de sous-pression utilisé.

6. Procédé selon la revendication 5, **caractérisé en ce que** la valeur maximale de la barrière d'erreur (p_vac_max) présente une valeur variable en fonction du nombre, du type et de la capacité de puissance du ou des générateurs de sous-pression activés.

7. Procédé selon l'une quelconque des revendications 1 à 6, **caractérisé en ce qu'**en cas de générateur de sous-pression inactif et d'amplificateur de force de freinage non actionné, la valeur de la barrière d'erreur est maintenue constante.

8. Procédé selon l'une quelconque des revendications 1 à 6, **caractérisé en ce qu'**en cas de générateur de sous-pression inactif et d'amplificateur de force de freinage non actionné, la valeur de la barrière d'erreur peut être rabaissée d'une valeur de différence (delta_p_vac) prédéfinissable.

9. Procédé selon la revendication 8, **caractérisé en ce que** la valeur de différence (delta_p_vac) est calculée en fonction d'une pression de frein hydraulique (p_tmc) réglée sur la base d'un actionnement de frein.

10. Procédé selon l'une quelconque des revendications 8 ou 9, **caractérisé en ce que** le calcul de la valeur de différence (delta_p_vac) dépend de la pression de frein hydraulique (p_tmc) en tenant compte de la caractéristique d'absorption de volume du système de frein.

11. Procédé selon l'une quelconque des revendications 8 à 10, **caractérisé en ce que** la valeur maximale de la pression de frein hydraulique (p_tmc) atteinte pendant un actionnement de frein est utilisée pour calculer la valeur de différence (delta_p_vac).

12. Procédé selon l'une quelconque des revendications 8 à 10, **caractérisé en ce que** la valeur cumulée de la pression de frein hydraulique (p_tmc) à l'intérieur d'un actionnement de frein est utilisée pour calculer le montant de delta_p_vac.

13. Procédé selon l'une quelconque des revendications 9 à 12, **caractérisé en ce que** la pression de frein hydraulique (p_tmc) est déterminée à l'aide d'un capteur de pression dans le système ESC (contrôle de stabilité électronique).

14. Procédé selon l'une quelconque des revendications 9 à 12, **caractérisé en ce que** la course de déplacement de la membrane dans l'amplificateur de force de freinage sous vide est utilisée pour calculer la valeur de différence (delta_p_vac).

15. Procédé selon la revendication 14, **caractérisé en ce que** la valeur maximale de la course de déplacement de la membrane atteinte pendant l'actionnement de frein dans l'amplificateur de force de freinage est utilisée pour calculer la valeur de différence (delta_p_vac).

16. Procédé selon la revendication 14, **caractérisé en ce que** la valeur cumulée de la course de déplacement de la membrane atteinte pendant un actionnement de frein dans l'amplificateur de force de freinage à l'intérieur d'un actionnement de frein est utilisée pour calculer la valeur de différence (delta_p_vac).

17. Procédé selon l'une quelconque des revendications 14 à 16, **caractérisé en ce que** la course de déplacement de la membrane est détectée dans l'amplificateur de force de freinage sous vide à l'aide d'un capteur de course de membrane prévu dans l'amplificateur de force de freinage.

18. Procédé selon l'une quelconque des revendications 14 à 16, **caractérisé en ce que** la course de déplacement de la membrane dans l'amplificateur de force de freinage sous vide est détectée à l'aide d'un capteur d'orientation (course ou angle) placé au niveau de la pédale de frein.

19. Procédé selon l'une quelconque des revendications 14 à 16, **caractérisé en ce que** la course de déplacement de la membrane est détectée dans l'amplificateur de force de freinage sous vide à l'aide d'un capteur de course situé dans le maître-cylindre de frein ou au niveau de celui-ci.
